# EUROPÄISCHE PATENTSCHRIFT

(11) **EP 4 177 444 B1**
(45) Veröffentlichungstag und Bekanntmachung des Hinweises auf die Patenterteilung: **07.01.2026**
(21) Anmeldenummer: 22201988.7
(22) Anmeldetag: 17.10.2022
(51) Int. Cl.: F01D 17/16, F04D 29/56, F01D 9/04

(54) **VERSTELLLEITSCHAUFEL MIT KONVEX AUSGEFÜHRTEM, RADIAL INNEREM LAGERABSCHNITT FÜR EINE GASTURBINE, INSBESONDERE FLUGGASTURBINE**
VARIABLE-PITCH VANE WITH CONVEX RADIALLY INNER BEARING SECTION FOR A GAS TURBINE, ESPECIALLY FOR AN AVIATION GAS TURBINE
AUBE DIRECTRICE À CALAGE VARIABLE AVEC SECTION DE PALIER RADIALEMENT INTÉRIEURE CONVEXE POUR TURBINE À GAZ, EN PARTICULIER TURBINE À GAZ D'AVION

(30) Priorität: 08.11.2021 DE 102021129033
(43) Veröffentlichungstag der Anmeldung: 10.05.2023
(73) Patentinhaber: MTU Aero Engines AG, 80995 München (DE)
(72) Erfinder: Hölzel, Andreas, 80995 München (DE); Roth, Christian, 80995 München (DE); Prieschl, Franz, 80995 München (DE); Eichner, Josef, 80995 München (DE); Mosbacher, Mike, 80995 München (DE); Mairhanser, Vitalis, 80995 München (DE)

(56) Entgegenhaltungen:
- EP-A1- 2 884 054
- EP-A1- 3 315 729
- EP-A2- 1 031 703
- DE-A1- 102009 038 623
- DE-B- 1 244 479
- RU-C1- 2 614 456

## Beschreibung

Die vorliegende Erfindung betrifft eine Verstellleitschaufel für einen Verdichter, insbesondere Hochdruckverdichter, einer Gasturbine, insbesondere Fluggasturbine, mit einem radial äußeren Lagerabschnitt, einem radial inneren Lagerabschnitt, und einem Schaufelabschnitt, der sich in Radialrichtung zwischen dem äußeren Lagerabschnitt und dem inneren Lagerabschnitt erstreckt, wobei der äußere und der innere Lagerabschnitt derart ausgeführt sind, dass die Verstellleitschaufel drehbar um eine Schaufelachse im Verdichter aufnehmbar ist, und wobei der radial innere Lagerabschnitt zapfenartig ausgebildet ist und eine bezogen auf die Schaufelachse umlaufende Mantelfläche aufweist, die konvex ausgebildet ist. Ferner betrifft die Erfindung eine Gasturbine mit Verdichter und mehreren derartigen Verstellleitschaufeln. Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Verstellleitschaufeln mit kugelförmigen inneren Lagerabschnitten sind beispielsweise aus der DE 10 2019 122 851 A1, der EP 2 817 490 B1 und der RU 2 614 456 C1 bekannt Ellipsoide innere Lagerabschnitte werden in EP 3 315 729 A beschrieben.

In Verdichtern von Gasturbinen werden zur Lagerung von Verstellleitschaufeln sowohl radial außen, als auch radial innen zylindrische Gleitlager, insbesondere in Form von zylindrischen Bohrungen, als jeweilige Aufnahmen für die Lagerabschnitte der Verstellleitschaufeln eingesetzt. Zusätzlich können Buchsen oder Hülsen als Verschleißteile eingesetzt werden, wobei solche Buchsen bzw. Hülsen im Kraftübertragungsweg zwischen dem jeweiligen Lagerabschnitt der Verstellleitschaufel und dem betreffenden zylindrischen Gleitlager angeordnet sind.

Sowohl bei kugelförmigen inneren Lagerabschnitten als auch bei zylindrischen inneren Lagerabschnitten hat sich gezeigt, dass die Kraftübertragung im Bereich des inneren Lagerabschnitts zu stark erhöhten punktuellen Belastungen oder Flächenbelastungen im Gleitlager führen können. Insbesondere die Flächenbelastungen an den Gleitlagern und den zylindrischen Lagerabschnitten führen zu unerwünschten Verschleiß.

Die der Erfindung zu Grunde liegende Aufgabe wird darin gesehen, eine Verstellleitschaufel anzugeben, mit der obige Nachteile verringert oder vermieden werden können.

Zur Lösung dieser Aufgabe werden eine Verstellleitschaufel und ein Gasturbine mit den Merkmalen der jeweiligen unabhängigen Patentansprüche vorgeschlagen. Vorteilhafte Ausgestaltungen mit zweckmäßigen Weiterbildungen sind in den abhängigen Patentansprüchen angegeben.

Vorgeschlagen wird also eine Verstellleitschaufel für einen Verdichter, insbesondere Hochdruckverdichter, einer Gasturbine, insbesondere Fluggasturbine, mit einem radial äußeren Lagerabschnitt, einem radial inneren Lagerabschnitt, und einem Schaufelabschnitt, der sich in Radialrichtung zwischen dem äußeren Lagerabschnitt und dem inneren Lagerabschnitt erstreckt, wobei der äußere und der innere Lagerabschnitt derart ausgeführt sind, dass die Verstellleitschaufel drehbar um eine Schaufelachse im Verdichter aufnehmbar ist, und wobei der radial innere Lagerabschnitt zapfenartig ausgebildet ist und eine bezogen auf die Schaufelachse umlaufende Mantelfläche aufweist, die konvex ausgebildet ist. Dabei ist vorgesehen, dass der Krümmungsradius der konvexen Mantelfläche wenigstens doppelt so groß ist wie der maximale Durchmesser des Lagerabschnitts.

Durch eine derartige Ausgestaltung der Mantelfläche weist der radial innere Lagerabschnitt eine Formgebung auf, die insbesondere im Betreib des Verdichters bei entsprechenden Krafteinwirkungen eine verbesserte Kraftübertragung zwischen dem Lagerabschnitt und dem Gleitlager ermöglicht. Dabei ist der Krümmungsradius der Mantelfläche so groß gewählt, dass einerseits kein vollflächiger Kontakt zwischen Mantelfläche und Gleitlager vorliegt und dass andererseits auch kein punktueller Kontakt wie bei einer kugelförmigen Ausgestaltung vorliegt. Die mit großem Radis gekrümmte Mantelfläche ermöglicht insbesondere im Betrieb und unter entsprechender Krafteinwirkung einen teilflächigen Kontakt zwischen der Mantelfläche und dem Gleitlager, so dass die Flächenbelastung in diesem Bereich optimiert verteilt werden kann.

Bei der Verstellleitschaufel kann der Krümmungsradius der konvexen Mantelfläche das Dreifache bis Zehnfache des maximalen Durchmessers des Lagerabschnitts betragen. Hierdurch ist es möglich, eine passende konvexe Krümmung der Mantelfläche auszubilden.

Ferner kann bei der Verstellleitschaufel die konvexe Mantelfläche durch mehrere Mantelflächenabschnitte mit einem jeweils anderen Krümmungsradius gebildet werden. Es ist also denkbar, dass die konvexe Mantelfläche durch mehrere unterschiedliche Krümmungsradien gebildet ist, die sozusagen ineinander übergehen. Beispielsweise ist es denkbar, dass der Krümmungsradius in einem zentralen oder mittleren Bereich größer ist als in radial weiter innen oder außen liegenden Bereichen des inneren Lagerabschnitts bzw. der Mantelfläche.

Vorgeschlagen wird ferner eine Gasturbine, insbesondere Fluggasturbine, mit wenigstens einem verstellbaren Verdichter, insbesondere verstellbaren Hochdruckverdichter, wobei vorgesehen ist, dass der Verdichter mehrere in Umfangsrichtung nebeneinander angeordnete, oben beschriebene Verstellleitschaufeln aufweist.

Bei der Gasturbine kann der Verdichter einen radial inneren Lagerring aufweisen mit mehreren im Umfangsrichtung nebeneinander angeordnete zylindrischen Bohrungen, wobei in jeder zylindrischen Bohrung ein innerer Lagerabschnitt mit konvexer Mantelfläche aufgenommen ist.

Ferner kann die Gasturbine eine radial äußere Verstellringeinrichtung aufweisen, die mit den radial äußeren Lagerabschnitten der Verstellleitschaufeln verbunden ist, derart dass alle Verstellleitschaufeln gleichzeitig um ihre jeweilige Schaufelachse drehbar sind.

Bezüglich der Dimensionierung des zylindrischen Bohrung im inneren Lagerring und dem Krümmungsradius der Mantelfläche des inneren Lagerabschnitts der Verstellleitschaufel kann auch gesagt werden, dass der Krümmungsradius der Mantelfläche mindestens das Doppelte, insbesondere das Drei- bis Zehnfache, von dem Durchmesser der zylindrischen Bohrung beträgt.

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine.
Fig. 2 zeigt in einer vereinfachten und schematischen Schnittdarstellung eine Verstellleitschaufel mit ihrem radial inneren Lagerabschnitt.

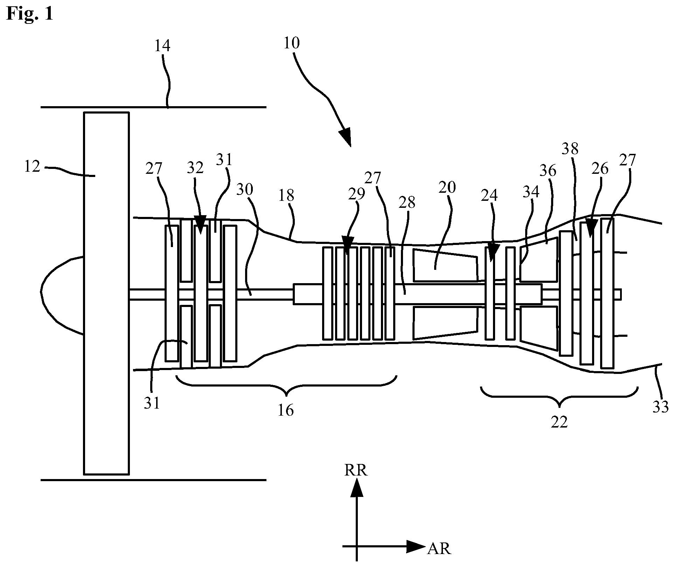

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 28, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die nachfolgende Beschreibung einer Ausführungsform einer Verstelleitschaufel bezieht sich insbesondere auf den Verdichter 16, insbesondere den Hochdruckverdichter 29.

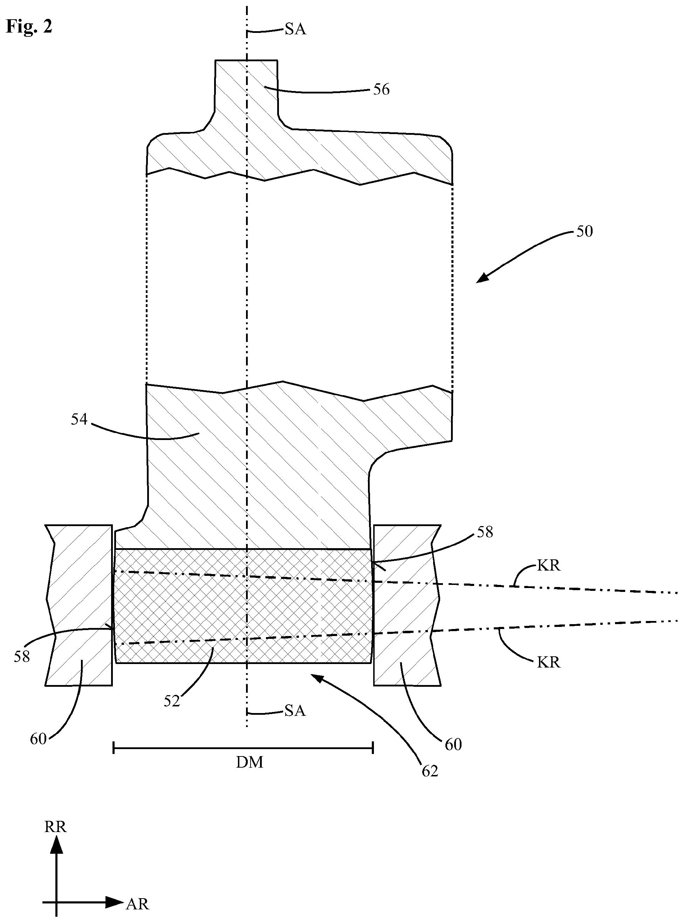

Fig. 2 zeigt in einer vereinfachten und schematischen Schnittdarstellung eine Verstellleitschaufel 50. Die Verstellleitschaufel 50 weist einen radial inneren Lagerabschnitt 52 auf. Nach radial außen schließt sich an den Lagerabschnitt 52 ein Schaufelabschnitt an. Der Schaufelabschnitt 54 erstreckt sich dabei nach radial außen bis zu einem hier nur sehr vereinfacht angedeuteten radial äußeren Lagerabschnitt 56.

Der äußere und der innere Lagerabschnitt 52, 56 sind dabei derart ausgeführt, dass die Verstellleitschaufel 50 drehbar um eine Schaufelachse SA im Verdichter aufnehmbar ist. Der radial innere Lagerabschnitt 52 ist zapfenartig ausgebildet ist und weist eine bezogen auf die Schaufelachse SA umlaufende Mantelfläche 58 auf, die konvex ausgebildet ist. Der Krümmungsradius KR der konvexen Mantelfläche 58 ist dabei wenigstens doppelt so groß ist wie der maximale Durchmesser DM des Lagerabschnitts 52.

In der Fig. 2 sind zwei Krümmungsradien KR der Mantelfläche 58 mit doppelt strichpunktierten Linien angedeutet, die sich in der Fig. 2 (rechts) nicht schneiden. Hierdurch ist ersichtlich, dass sich ein Mittelpunkt für einen Kreis, dessen Radius dem Krümmungsradius KR entspricht, außerhalb der Fig. 2 befindet und dass der Krümmungsradius KR deutlich größer ist als der Durchmesser DM des Lagerabschnitts 52.

Die gewählte Darstellung illustriert auch, dass der Krümmungsradius KR der konvexen Mantelfläche 58 das Dreifache bis Zehnfache des maximalen Durchmessers DM des Lagerabschnitts 52 betragen kann.

Auch wenn dies in der Fig. 2 nicht explizit dargestellt ist, kann die konvexe Mantelfläche 58 auch durch mehrere Mantelflächenabschnitte mit einem jeweils anderen Krümmungsradius gebildet werden. Dabei kann jeder der verschiedenen Krümmungsradien die oben erwähnten Bedingungen in Relation zum Durchmesser DM des Lagerabschnitts 52 erfüllen.

In einer in Fig. 1 dargestellten Fluggasturbine 10, die wenigstens einen verstellbaren Verdichter, insbesondere den verstellbaren Hochdruckverdichter 29, aufweist, kann der Verdichter 29 mehrere in Umfangsrichtung nebeneinander angeordnete Verstellleitschaufeln 50 aufweisen, wie sie oben unter Bezugnahme auf die Fig. 2 beschrieben worden sind. Der Verdichter 29 kann hierzu einen radial inneren Lagerring 60 (Fig. 2) aufweisen mit mehreren im Umfangsrichtung nebeneinander angeordnete zylindrischen Bohrungen 62, wobei in jeder zylindrischen Bohrung 62 ein innerer Lagerabschnitt 52 mit konvexer Mantelfläche 58 aufgenommen ist. Der Durchmesser eine Bohrung 62 entspricht dabei im Wesentlichen dem maximalen Durchmesser DM des Lagerabschnitts 52, so dass auch in Bezug auf den Durchmesser der Bohrung gilt, dass der Krümmungsradius KR der Mantelfläche 58 mindestens doppelt so groß ist wie der Durchmesser der Bohrung 62.

### Bezugszeichenliste

- 10: Fluggasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 50: Verstellleitschaufel
- 52: radial innerer Lagerabschnitt
- 54: Schaufelabschnitt
- 56: radial äußerer Lagerabschnitt
- 58: Mantelfläche
- 60: Lagerring
- 62: Bohrung
- AR: Axialrichtung
- DM: Durchmesser Lagerabschnitt bzw. Bohrung
- KR: Krümmungsradius
- RR: Radialrichtung
- SA: Schaufelachse

## Patentansprüche

1. Verstellleitschaufel (50) für einen Verdichter (16), insbesondere Hochdruckverdichter (29), einer Gasturbine (10), insbesondere Fluggasturbine, mit
einem radial äußeren Lagerabschnitt (56),
einem radial inneren Lagerabschnitt (52),
einem Schaufelabschnitt (54), der sich in Radialrichtung (RR) zwischen dem äußeren Lagerabschnitt (56) und dem inneren Lagerabschnitt (52) erstreckt,
wobei der äußere und der innere Lagerabschnitt (52, 56) derart ausgeführt sind, dass die Verstellleitschaufel (50) drehbar um eine Schaufelachse (SA) im Verdichter (16, 29) aufnehmbar ist, und
wobei der radial innere Lagerabschnitt (52) zapfen- oder tellerartig ausgebildet ist und eine bezogen auf die Schaufelachse (SA) umlaufende Mantelfläche (58) aufweist, die konvex ausgebildet ist,
**dadurch gekennzeichnet, dass** ein Krümmungsradius (KR) der konvexen Mantelfläche (58) wenigstens doppelt so groß ist wie der maximale Durchmesser (DM) des radial inneren Lagerabschnitts (52).

2. Verstellleitschaufel (50) nach Anspruch 1, **dadurch gekennzeichnet, dass** der Krümmungsradius (KR) der konvexen Mantelfläche (58) das Dreifache bis Zehnfache des maximalen Durchmessers (DM) des Lagerabschnitts (52) beträgt.

3. Verstellleitschaufel (50) nach Anspruch 1 oder 2, **dadurch gekennzeichnet, dass** die konvexe Mantelfläche (58) durch mehrere Mantelflächenabschnitte mit einem jeweils anderen Krümmungsradius (KR) gebildet wird.

4. Verstellleitschaufel (50) nach einem der Ansprüche 1 bis 3, **dadurch gekennzeichnet, dass** diese auf ihrer bezüglich des Schaufelabschnitts (54) radial innenliegenden Seite ausschließlich über den Lagerabschnitt (52) gelagert ist.

5. Gasturbine (10), insbesondere Fluggasturbine, mit wenigstens einem verstellbaren Verdichter (16), insbesondere verstellbaren Hochdruckverdichter (29),
**dadurch gekennzeichnet, dass** der Verdichter (16, 29) mehrere in Umfangsrichtung nebeneinander angeordnete Verstellleitschaufeln (50) gemäß einem der vorhergehenden Ansprüche aufweist.

6. Gasturbine (10) nach Anspruch 5, **dadurch gekennzeichnet, dass** der Verdichter (16, 29) einen radial inneren Lagerring (60) aufweist mit mehreren im Umfangsrichtung nebeneinander angeordneten zylindrischen Bohrungen (62), wobei in jeder zylindrischen Bohrung (62) ein innerer Lagerabschnitt (52) mit konvexer Mantelfläche (58) aufgenommen ist.

7. Gasturbine (10) nach Anspruch 5 oder 6, **dadurch gekennzeichnet, dass** sie eine radial äußere Verstellringeinrichtung aufweist, die mit den radial äußeren Lagerabschnitten (56) der Verstellleitschaufeln (50) verbunden ist, derart dass alle Verstellleitschaufeln (50) gleichzeitig um ihre jeweilige Schaufelachse (SA) drehbar sind.

## Claims

1. Adjustable guide vane (50) for a compressor (16), in particular a high-pressure compressor (29), of a gas turbine (10), in particular an aircraft gas turbine, comprising
a radially outer bearing portion (56),
a radially inner bearing portion (52),
a vane portion (54) extending in the radial direction (RR) between the outer bearing portion (56) and the inner bearing portion (52),
the outer and the inner bearing portion (52, 56) being designed in such a way that the adjustable guide vane (50) can be received in the compressor (16, 29) so as to be able to rotate about a vane axis (SA), and
the radially inner bearing portion (52) being of pin-like or plate-like design and having a lateral surface (58) that extends circumferentially around the vane axis (SA), which lateral surface is convex,
**characterized in that** a curvature radius (KR) of the convex lateral surface (58) is at least twice as large as the maximum diameter (DM) of the radially inner bearing portion (52).

2. Adjustable guide vane (50) according to claim 1, **characterized in that** the curvature radius (KR) of the convex lateral surface (58) is three to ten times the maximum diameter (DM) of the bearing portion (52).

3. Adjustable guide vane (50) according to claim 1 or 2,
**characterized in that** the convex lateral surface (58) is formed by a plurality of lateral surface portions, each with a different curvature radius (KR).

4. Adjustable guide vane (50) according to any of claims 1 to 3,
**characterized in that** said adjustable guide vane, on the side thereof that is radially on the inside with respect to the vane portion (54), is supported exclusively via the bearing portion (52).

5. Gas turbine (10), in particular an aircraft gas turbine, comprising at least one adjustable compressor (16), in particular an adjustable high-pressure compressor (29),
**characterized in that** the compressor (16, 29) has a plurality of adjustable guide vanes (50) according to any of the preceding claims arranged adjacent to one another in the circumferential direction.

6. Gas turbine (10) according to claim 5, **characterized in that** the compressor (16, 29) has a radially inner bearing ring (60) comprising a plurality of cylindrical bores (62) arranged adjacent to one other in the circumferential direction, an inner bearing portion (52) with a convex lateral surface (58) being received in each cylindrical bore (62).

7. Gas turbine (10) according to claim 5 or 6, **characterized in that** it has a radially outer adjustable ring device which is connected to the radially outer bearing portions (56) of the adjustable guide vanes (50) in such a way that all adjustable guide vanes (50) can be rotated simultaneously about their particular vane axis (SA).

## Revendications

1. Aube directrice à calage variable (50) pour un compresseur (16), en particulier un compresseur haute pression (29), d'une turbine à gaz (10), en particulier d'une turbine à gaz d'aéronef, comportant
une section de palier radialement extérieure (56),
une section de palier radialement intérieure (52),
une section d'aube (54) s'étendant dans une direction radiale (RR) entre la section de palier extérieure (56) et la section de palier intérieure (52),
dans laquelle les sections de palier extérieure et intérieure (52, 56) sont conçues de telle sorte que l'aube directrice à calage variable (50) peut être reçue dans le compresseur (16, 29) de manière à pouvoir tourner autour d'un axe d'aube (SA), et
dans laquelle la section de palier radialement intérieure (52) est réalisée en forme de tourillon ou de cuvette et présente une surface d'enveloppe (58) circonférentielle par rapport à l'axe d'aube (SA) et réalisée de manière à être convexe,
**caractérisée en ce qu'un** rayon de courbure (KR) de la surface d'enveloppe (58) convexe est au moins deux fois plus grand que le diamètre maximum (DM) de la section de palier radialement intérieure (52).

2. Aube directrice à calage variable (50) selon la revendication 1,
**caractérisée en ce que** le rayon de courbure (KR) de la surface d'enveloppe (58) convexe est compris entre trois fois et dix fois le diamètre maximal (DM) de la section de palier (52).

3. Aube directrice à calage variable (50) selon la revendication 1 ou 2,
**caractérisée en ce que** la surface d'enveloppe (58) convexe est formée par plusieurs sections de surface d'enveloppe comportant un rayon de courbure (KR) respectivement différent.

4. Aube directrice à calage variable (50) selon l'une des revendications 1 à 3, **caractérisée en ce que** celle-ci est montée sur son côté radialement intérieur par rapport à la section d'aube (54) exclusivement par l'intermédiaire de la section de palier (52).

5. Turbine à gaz (10), en particulier turbine à gaz d'aéronef, comportant au moins un compresseur (16) à calage variable, en particulier un compresseur haute pression (29) à calage variable,
**caractérisée en ce que** le compresseur (16, 29) présente plusieurs aubes directrices à calage variable (50) selon l'une des revendications précédentes disposées côte à côte dans la direction circonférentielle.

6. Turbine à gaz (10) selon la revendication 5, **caractérisée en ce que** le compresseur (16, 29) présente une bague de palier radialement intérieure (60) comportant plusieurs alésages cylindriques (62) disposés côte à côte dans la direction circonférentielle, dans laquelle une section de palier intérieure (52) comportant une surface d'enveloppe (58) convexe est reçue dans chaque alésage cylindrique (62).

7. Turbine à gaz (10) selon la revendication 5 ou 6, **caractérisée en ce qu'**elle présente un dispositif formant anneau à calage variable radialement extérieur qui est relié aux sections de palier radialement extérieures (56) des aubes directrices à calage variable (50) de telle sorte que toutes les aubes directrices à calage variable (50) peuvent être tournées simultanément autour de leur axe d'aube (SA) respectif.
